# EUROPÄISCHE PATENTANMELDUNG

(11) **EP 1 741 599 A1**
(43) Veröffentlichungstag der Anmeldung: **10.01.2007**
(21) Anmeldenummer: 06009115.4
(22) Anmeldetag: 03.05.2006
(51) Int. Cl.: B60Q 7/00, B60Q 1/30

(54) **Heckklappe für Fahrzeuge**

(30) Priorität: 06.07.2005 DE 102005031590
(71) Anmelder: AUDI AG, 85045 Ingolstadt (DE)
(72) Erfinder: Wagenseil, Christian, 85053 Ingolstadt (DE); Meisel, Michael, 85055 Ingolstadt (DE)
(74) Vertreter: Engelhardt, Harald

(57) **Zusammenfassung**

Die Heckklappe (3) eines Personenkraftwagens (1) nimmt ein mit Reflektoren (19) versehenes Warndreieck auf, welches in einem Behältnis (11) angeordnet und an der Innenseite (6) der Heckklappe (3) befestigbar ist, wobei wenigstens eine Seitenfläche des Behältnisses (11) bei geöffneter Heckklappe 3 für nachfolgende Verkehrsteilnehmer sichtbar ist. Zumindest die sichtbare Seitenfläche des Behältnisses (11) weist mindestens eine Aussparung (17) auf, derart, dass ein oder mehrere Reflektoren (19) des Warndreiecks hinter der Aussparung (17) angeordnet sind.

## Beschreibung

Die Erfindung bezieht sich auf eine Heckklappe für Fahrzeuge, insbesondere für Personenkraftwagen, mit einem Reflektoren aufweisenden Warndreieck welches in einem Behälter aufgenommen und an der Innenseite der Heckklappe befestigbar ist, und wobei wenigstens eine Seitenfläche des Behältnisses bei geöffneter Heckklappe für nachfolgende Verkehrsteilnehmer sichtbar ist.

Es ist seit langer Zeit bekannt, Warndreiecke so an der Innenseite einer Heckklappe zu befestigen, dass diese bei geöffneter Heckklappe von Fahrzeuglenkern, die sich von hinten her dem Fahrzeug nähern, wahrgenommen werden können. Dies gilt besonders bei Dunkelheit und auftreffendem Scheinwerferlicht, da dann die Reflektoren der Warndreiecke eine zusätzliche Warnfunktion ausüben.

Es gibt jedoch auch gute Gründe die dafür sprechen, Warndreiecke nicht in der vorbeschriebenen Weise an der Innenseite der Heckklappe zu befestigen. Zum einen sind es optische Gründe, die gegen diese Art der Unterbringung für das Warndreieck sprechen. Aber auch praktische Überlegungen spielen eine wesentliche Rolle. Die bekannten Warndreiecke an der Innenseite der Heckklappe können oftmals Ursache für die Entstehung von Geräuschen sein. Zudem ist nicht auszuschließen, dass sich im Kofferraum des Fahrzeuges untergebrachte Gegenstände bei geschlossener Heckklappe mit dem Warndreieck verhaken und so zu Problemen beim Öffnen der Kofferraumklappe führen.

Der Erfindung liegt die Aufgabe zugrunde, mit einfachen Mitteln die Unterbringung eines in einem Behälter aufgenommen Warndreiecks an der Innenseite der Heckklappe eines Fahrzeuges so zu gestalten, dass gleichzeitig eine Warnfunktion bei geöffneter Heckklappe durch das Warndreieck gegeben ist.

Die Aufgabe wird dadurch gelöst, dass zumindest die sichtbare Seitenfläche des Behältnisses mindestens eine Aussparung aufweist und das Warndreieck derart in dem Behältnis untergebracht ist, dass ein oder mehrere Reflektoren des Warndreiecks hinter der Aussparung angeordnet sind. Somit lassen sich sowohl die Unterbringung des Warndreieckes in einem Behältnis, als auch die gewünschte Warnfunktion erreichen. Die Umsetzung der erfindungsgemäßen Lösung ist meist kostenneutral möglich. Da die meisten Behältnisse für Warndreiecke Kunststoffboxen sind, müssen die Aussparungen nur in dem Werkzeug zur Herstellung der Kunststoffboxen berücksichtigt werden. Bei der eigentlichen Herstellung entsteht kein Mehraufwand; im Gegenteil, es wird weniger Material benötigt. Es wäre zwar denkbar, Behältnisse ohne die erfindungsgemäße Aussparung mit einer reflektierenden Folie zu versehen, um den gewünschten Effekt zu erreichen. Diese reflektierenden Folien sind jedoch relativ teuer. Darüber hinaus besteht die Gefahr, dass die Folien beschädigt werden.

Das Warndreieck ist so in dem Behälter unterzubringen, dass seine Reflektoren hinter der Aussparung oder den Aussparungen angeordnet sind. Darauf kann der Fahrzeugbenutzer besonders hingewiesen werden. Es ist auch möglich, durch konstruktive Gestaltung des Behältnisses dafür Sorge zu tragen, dass das Warndreieck nur in der richtigen Lage in das Behälters eingeführt werden kann.

Besonders vorteilhaft ist, wenn die Aussparungen an zwei gegenüberliegenden Seitenflächen des Behältnisses ausgebildet sind, so dass unabhängig davon, wie der Benutzer das Warndreieck in das Behältnis einführt, stets Reflektoren des Warndreiecks hinter den Aussparungen angeordnet sind. Um zu verhindern, dass der Fahrzeugbenutzer trotzdem das Behältnis falsch, dass heißt mit den Reflektoren zur Heckklappe hin an dieser befestigen möchte, können einfach Maßnahmen gegen eine Falschmontage eingesetzt werden. Solche bestehen beispielsweise darin, dass das Behältnis nicht symmetrisch ist und in einer angepassten Vertiefung in der Heckklappe montiert werden muss. Auch durch die Wahl und Anordnung der Befestigungsmittel für das Behältnis lässt sich sicherstellen, dass das Behältnis nicht falsch an der Heckklappe befestigt wird.

Gemäß einer vorteilhaften Weiterbildung der Erfindung können die Aussparungen in dem Behältnis in ihrer Form ein Warnsymbol, ein Markenzeichen oder einen Schriftzug wiedergeben. Diese Dinge lassen sich ohne Mehrkosten realisieren und erhöhen die Aufmerksamkeit bzw. können für werbliche Zwecke genutzt werden.

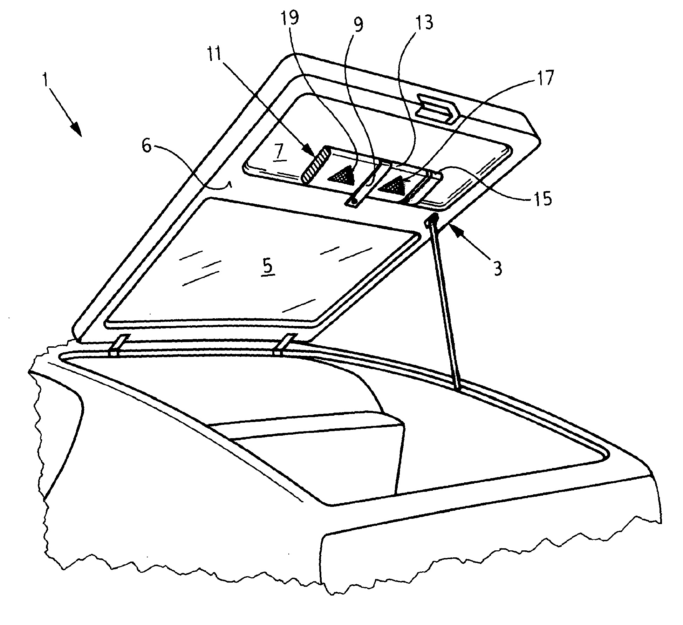

Ein Ausführungsbeispiel der Erfindung ist in der Zeichnung dargestellt und wird nachfolgend näher beschrieben.

Die Zeichnung zeigt in perspektivischer Darstellung einen Personenkraftwagen 1 mit einer Heckklappe 3 in geöffneter Stellung. Die Heckklappe 3 nimmt eine Heckscheibe 5 auf und ist an ihrer Innenseite 6 mit einer Vertiefung 7 versehen. Im Bereich dieser Vertiefung 7 ist über einen Halter 9 ein Behältnis 11 für ein Warndreieck befestigt.

Das Behältnis 11 ist köcherförmig aufgebaut und setzt sich aus einem Grundkörper 13 und einem Deckel 15 zusammen. In dem Grundkörper 13 sind zwei dreieckförmige Aussparungen 17 vorgesehen. Durch die Aussparungen 17 sind die Reflektoren 19 eines in der Zeichnung nicht näher erkennbaren Warndreiecks zu sehen.

Bei geöffneter Heckklappe 3 tragen die hinter den Aussparungen 17 angeordneten Reflektoren 19 des Warndreiecks dazu bei, dass dann, wenn der Personenkraftwagen 1 steht und die Heckklappe 3 geöffnet ist, der Personenkraftwagen 1 vom nachfolgenden Verkehr besser wahrnehmbar ist.

## Patentansprüche

1. Heckklappe für Fahrzeuge, insbesondere für Personenkraftwagen, mit einem Reflektoren aufweisenden Warndreieck welches in einem Behältnis aufgenommen und an der Innenseite der Heckklappe befestigbar ist, und wobei wenigstens eine Seitenfläche des Behältnisses bei geöffneter Heckklappe für nachfolgende Verkehrsteilnehmer sichtbar ist, **dadurch gekennzeichnet, dass** zumindest die sichtbare Seitenfläche des Behältnisses (11) mindestens eine Aussparung (17) aufweist und das Warndreieck derart in dem Behältnis untergebracht ist, dass ein oder mehrere Reflektoren (19) des Warndreiecks hinter der Aussparung (17) angeordnet sind.

2. Heckklappe nach Anspruch 1, **dadurch gekennzeichnet, dass** die Aussparungen (17) an zwei gegenüberliegenden Seitenflächen des Behältnisses (11) ausgebildet sind.

3. Heckklappe nach Anspruch 1 oder 2, **dadurch gekennzeichnet, dass** die Aussparungen (17) in ihrer Form ein Warnsymbol, ein Markenzeichen oder einen Schriftzug wiedergeben.
